# EUROPEAN PATENT APPLICATION

(11) **EP 2 796 533 A1**
(43) Date of publication of application: **29.10.2014**
(21) Application number: 13165453.5
(22) Date of filing: 25.04.2013
(51) Int. Cl.: C10B 39/02, F26B 17/14, B01J 8/12, B01D 53/50

(54) **System and method for conditioning particulate matter**

(71) Applicant: Danieli Corus BV, 1951 ME Velsen Noord (NL)
(72) Inventor: Verbraak, Petrus Leonardus, 1381 CZ Weesp (NL); Vaynshteyn, Roman, 1945 XN Beverwijk (NL)
(74) Representative: De Vries & Metman

(57) **Abstract**

A method of conditioning particulate material (M) and/or a gas is provided, comprising the steps of: feeding an amount of particulate material up to a filling level (L) into in an inner volume (V) of a silo (3) having silo walls (5), a gas inlet (13) and a gas outlet (11), and generating a gas flow (F) of a gas from the gas inlet through the particulate material to the gas outlet which comprises applying suction to the inner volume of the silo through the gas outlet, wherein the gas outlet is located in a silo wall below the filling level and covered by the particulate material. A system is also provided.

## Description

### TECHNICAL FIELD

The present disclosure relates to conditioning particulate material, in particular to conditioning cokes and/or ores. The present disclosure further relates to a system for conditioning particulate material, in particular to conditioning cokes and/or ores. The conditioning concerns in particular heating or cooling, drying and/or ventilating.

### BACKGROUND

Various methods and systems for conditioning particulate material, in particular cokes and/or ores, are known wherein the material to be conditioned is subject to a flow of conditioning gas, e.g. heated dry air for drying the matter.

E.g., the material is stored and agitated in a rotating drum. However, this leads to grinding of the material, resulting in smaller particles and significant dust formation, which lead to material losses and pollution.

Another technique comprises (vibratory) fluidised beds wherein the particles are fluidised by (an updraft of) conditioning gases. This generally requires spreading out of the material over large treatment areas producing a thin layer of the material with a large surface area. This can complicate accurate control over the process. Fluidisation causes agitation of dust and increases dust formation.

A further technique relies on free-fall of the particles through (an updraft of) conditioning gas. This complicates accurate control of the process conditions. This technique also causes fractioning of the particles of the particulate material and dust formation.

More importantly, these techniques are costly and require dedicated apparatus that take up valuable real estate on a production site.

US 4,705,474 discloses a method and apparatus for preparing a feed mixture, made of several batch components, at one stage in order to feed it into a smelting furnace. The preparation of the batch may include the preheating and drying of the material, the removal of crystal waters and evaporable substances as well as the conduction of the batch into the smelting furnace. According to US 4,705,474, a hot inert gas is conducted through a downwards settling batch so that the gas is mixed into the batch as well as possible, but even partial fluidization is prevented. The apparatus of US 4,705,474 comprises a pretreatment silo which is uniform at the upper part is divided into several sub-silos at the lower part. At the lower part of the sub-silos there are connected ducts wherealong the batch flows into the smelting furnace located below the pretreatment silo. In between the sub-silos there is located the gas distribution chamber, wherefrom the gases are distributed through the distribution ducts extending to the sub-silos and the gases are discharged at the top of the silo. The employed gas is obtained by means of burning the exhaust gases from the smelting furnace and by combining them with cleaned circulation gases. To minimize the dust content of gases leaving the bed surface and rising into the gas space located in the top part of the silo, the gases are conducted out of the silo in a flow as even as possible, in particular due to the provision of two or more outlets in the gas space located above the bed surface.

This system is relatively complex and delicate, and accurate gas flow control is demanded to prevent even partial fluidization. Moreover, dust formation and agitation are not efficiently prevented.

The aforementioned issues also apply for methods and processes for conditioning a gas by interaction with particulate material.

In view of the above, there remains a demand for further improvements in conditioning particulate matter, in particular to reduce dust formation, to improve and/or to simplify process control.

### SUMMARY

In view of such demands, herewith a method and a system according to the appended claims are provided.

In an aspect, a method of conditioning particulate material and/or a gas is provided which comprises the steps of: feeding an amount of particulate material up to a filling level into in an inner volume of a silo having silo walls, a gas inlet and a gas outlet, and generating a gas flow of a gas, in particular a dry hot gas, from the gas inlet through the particulate material to the gas outlet which comprises applying suction to the inner volume of the silo through the gas outlet, wherein the gas outlet is located in a silo wall below the filling level and covered by the particulate material.

Due to this, the gas flow out of the particulate material may be contained and controlled. Dust formation and/or agitation is reduced or even prevented since part of the material remains above the gas outlet and the gas flow can be kept within the material. Further, the material can serve as a precoat filter for the gas outlet, reducing the amount of dust entrained in the gas flow. Dust reduction reduces (possible) environmental impact of the conditioning method and it decreases loss of blown-away material.

Applying the conditioning in a storage silo obviates additional conditioning apparatus such as fluidized bed conveyors etc. This facilitates integration in existing process flow and reduces demand for valuable resources such as space, energy and/or process time. Also, further material agitation is obviated reducing formation of dust by erosion due to the material particles hitting against each other.

Conditioning particulate material may comprise drying and/or heating such as by hot dry conditioning gas e.g. for drying and heating pellets and other lump material with reasonable permeability. A particular example is conditioning cokes for use in a blast furnace. However, conditioning may also or alternatively comprise wetting, cooling, oxygenation etc. Efficiently, the conditioning gas may comprise exhaust gases of a hot process, e.g. exhaust gases of a burner, a hot stove and/or a blast furnace which are generally hot and dry and very well suited for drying and heating particular matter like cokes. In stead of using such gases directly, their heat content may be used for heating a particular conditioning gas in a heat exchanger.

Conversely, the humidity and/or composition of a gas to be conditioned may be regulated by interaction with particular conditioning material.

In an embodiment, the gas inlet is arranged below the gas outlet and the gas flow is substantially upward. This is particularly useful for a method for drying and heating particulate material since the natural upward flow direction of the hot gas is used. In an embodiment wherein the particulate material to be conditioned flows under gravity in an upward heated conditioning gas stream a reverse flow heat exchanging arrangement can be realised.

The gas outlet and/or inlet may comprise plural exits and/or entrances, respectively, distributed at the appropriate level along one or more silo wall portions, respectively, in particular extending around the silo, so as to withdraw or introduce the gas in plural points and/or directions from/into the silo inner volume and the particulate material, respectively. This facilitates achieving an even distribution of the gas through the material and thus increases control over the conditioning process. Gas inlets and/or outlets at plural heights may be provided, which may be used in controlled manner in accordance with the above, such that each gas outlet, and preferably each gas inlet, in operation is covered by the particulate material. This facilitates controlled operation of plural outlets and/or inlets and allows stratification of the conditioning by controlling different conditioning conditions in different layers of the material.

In an embodiment comprises blowing a conditioning gas into the inner volume of the silo through the gas inlet. The combination of blowing and suction allows accurate control of the gas flow between the inlet and outlet. Thus, gas pressure within the inner volume of the silo may be controlled and leaking in and/or out of the condition gas can be prevented, accordingly reducing contamination of the conditioning gas by environmental gas and/or reducing contamination of the environment by conditioning gas and/or dust. Also, process parameters such as gas flow velocity and dwell time in the inner volume of the silo may be controlled. Note that in case the conditioning comprises a temperature change of the gas, e.g. heating the particulate material by introduction of hot conditioning gas leading to cooling of the gas, changes in the gas volume, pressure and velocity occur. Controlled suction and/or forced introduction allows adaptation to such changes. It also allows to keep the silo at a pressure at or close to the ambient pressure. This obviates expensive pressure vessels and/or other measures to account for an over pressure or under pressure within the silo.

In an embodiment at least part of the gas flow is generated by feeding a conditioning gas into the particulate material to be conditioned through a gas inlet that is located in a silo wall below the filling level and covered by the particulate material. Thus, the introduction location of the conditioning gas into the material may be well determined, increasing control of conditioning process parameters. Further, the gas flow can be confined within the material and formation or agitation of dust can be reduced or even prevented.

Embodiments may comprise applying additional gas suction to the inner volume of the silo through an additional gas outlet above the filling level and/or applying additional gas suction to the inner volume of the silo through an additional gas outlet that is located in a silo wall below the filling level and covered by the particulate material. Thus further control of the gas flow and the gas pressure inside the silo are facilitated, e.g. in reaction to rapid and/or localised variations in the effective pressure distribution in the silo and in particular within the layer of particulate material, which may vary depending on compaction of the material, chemical and/or physical aspects of the material (wet / dry, sticking or not, particle sizes, weights and shapes, etc.).

The additional suction should cause a gas flow that is only small fraction, e.g. 10% or less preferably below about 5% of gas mass or gas volume compared to the gas flow from the gas inlet to the gas outlet, in order to prevent dust formation and/or agitation.

The method is suitable for use in a batch process but also for a continuous process. Accordingly, an embodiment comprises providing a flow, in particular a (quasi-)constant flow, of the particulate material through the silo, and regulating the suction of gas out of and, where applicable, the blowing of conditioning gas into the inner volume of the silo, respectively, in accordance with the flow of the particulate material through the silo, e.g. with respect to the flow velocity, the amount and/or the density of the flowing material. Such parameters may vary during operation and regulation of the gas suction and/or introduction may be performed actively, e.g. real-time in response to measurements of flow parameters and/or in a feed-back arrangement.

In accordance with the above, in another aspect a system for conditioning particulate material or gas, in particular cokes, ores and/or pellets is provided. The system is particularly suited for conditioning particulate material according to embodiments of the method described herein. The system comprises a silo having silo walls and an inner volume for holding particulate material to be conditioned, a gas outlet arranged in a silo wall and a gas inlet arranged in a silo wall; a main suction device and a main suction ductwork connecting the gas outlet with the main suction device for removing gas from the inner volume of the silo. The silo is arranged for holding particulate material in the inner volume up to a filling level that is above the gas outlet for, in use and when an amount of particulate material to be conditioned is filled up to the filling level into the inner volume of the silo, generating a gas flow of a conditioning gas from the gas inlet through the particulate material to the gas outlet that is below the filling level and covered by the particulate material. This facilitates conditioning particulate material with reduced dust formation.

An embodiment comprises a blower and a blowing ductwork connecting the gas inlet with the blower for forcing conditioning gas into the inner volume of the silo through the gas inlet to generate the gas flow, and wherein in particular the gas inlet is arranged below the gas outlet. This facilitates controlling the gas flow and gas pressure within the inner volume of the silo.

In an embodiment, the silo is arranged for holding particulate material in the inner volume up to a filling level that is above the gas inlet for, in use and when an amount of particulate material to be conditioned is filled up to the filling level into the inner volume of the silo, generating at least part of the gas flow of a conditioning gas from the gas inlet being below the filling level and covered by the particulate material, and wherein in particular the gas inlet is arranged below the gas outlet. Thus formation and/or agitation of dust can be further reduced. If in such case a blower is provided in the system, it should preferably be configured for forcing the conditioning gas into the interior volume of the silo through the layer of particulate material.

In an embodiment, the gas inlet is connected with an exhaust gas system for a hot process, in particular an exhaust gas system of a hot stove and/or a blast furnace, for using the heat and dryness of exhaust gasses for heating and drying the particulate matter. Depending on the exhaust gas, the exhaust gas may be used itself, possibly after filtering and/or cleaning, or the exhaust gas can be used to heat the actual gas to be used for the conditioning process in a heat exchanger. However, hot gas produced by a dedicated burner (or other hot gas generator) can be used. This may facilitate more detailed control of properties of the gas, e.g. the gas temperature and/or composition, e.g. the amount of CO in the gas can be reduced by operating the burner with an excessive supply of oxygen.

An embodiment comprises a first additional gas outlet arranged in a silo wall and a first additional suction ductwork connecting the first additional gas outlet with a suction device for removing gas from the inner volume of the silo, for in use and when an amount of particulate material to be conditioned is filled up to the filling level into the inner volume of the silo, applying additional suction to the inner volume of the silo above the filling level, wherein in particular the first additional suction ductwork comprises a gas flow regulator. Another embodiment, possibly combined with the previous embodiment, comprises a second additional gas outlet arranged in a silo wall and a second additional suction ductwork connecting the second additional gas outlet with a suction device for removing gas from the inner volume of the silo for in use, and when an amount of particulate material to be conditioned is filled up to the filling level into the inner volume of the silo, having second additional gas outlet covered by the particulate material and generating a gas flow through the particulate material to the second additional gas outlet, wherein in particular the second additional ductwork comprises a gas flow regulator for adjustably removing gas from the inner volume of the silo. Such embodiments increase control over the gas flow and pressure in the inner volume of the silo.

In such embodiment at least one of the first and second additional ductworks may be connected to the main suction ductwork and/or the main suction device. This obviates the need for one or more additional suction devices and simplifies the system. In particular in such system the provision of one or more gas flow regulators in the suction ductwork and/or the first and second additional ductworks enable accurate control over the gas flow and interior pressure in the silo inner volume, by which also a pressure difference within the silo inner volume may be controlled. Such control may be further enhanced by a controllable forced introduction of conditioning gas into the silo inner volume.

In an embodiment, the silo has an upper portion and a tapered lower portion and at least the gas outlet is formed in the tapered lower section. This facilitates control over the position and distribution of the particulate material. In such arrangement in particular gas inlet and/or the gas outlet may be provided with a downward-directed aperture, e.g. being shielded with a downward directed baffle. Such system facilitates in particular (quasi-) continuous operation of the system wherein particulate material to be conditioned is introduced into and withdrawn out of the silo in (quasi-) continuous manner, thus providing a particulate material flow through the silo, since the gas outlet and/or gas inlet do not significantly hinder the particulate material flow through the silo. It is presently believed that in a tapered portion the gas flow may be more easily evenly distributed than in an arrangement with parallel side walls, in particular when the gas flow is introduced from plural directions and points around the particulate material and in a direction from the narrower end towards the wider end of the tapered portion.

In an embodiment the silo has an entrance port for introducing the particulate material to be conditioned and an exit port for dispensing conditioned particulate material and the system is configured for continuous or quasi-continuous operation by continuous or repeated introduction and withdrawal of particulate material into and out of the silo, respectively, thus providing a particulate material flow through the silo, wherein the exit port is arranged below the gas inlet and the gas outlet. Thus, (quasi-) continuous operation is facilitated. Preferably, in such case, the suction and the blowing are controllable such that the conditioning gas can be introduced and flown through the material, in particular in upwards direction, wherein the gas is prevented from escaping through the exit port.

In this disclosure, "quasi-continuous" operation means that, on the one hand, the flow of material need not be continuous, in particular not stationary, and that at least part of the flow may vary or be interrupted, but also, on the other hand, that the silo is not repeatedly fully emptied and refilled as in batch-wise operation.

In a further aspect, the system can be used for conditioning a gas by interaction of the gas to be conditioned with conditioning particulate material. An according method of conditioning a gas is therefore provided herewith as well. It is noted that the methods conditioning particulate material and a gas may be performed concurrently; drying wet particulate material with gas with a low moisture content results in dried particulate material and gas with a high moisture content. Chemical interactions, which may comprise reaction of components of the gas interacting with the particulate material, e.g. reactions within the gas mediated by one or more catalysers in or on particles of the particulate material may also be performed.

### BRIEF DESCRIPTION OF THE DRAWINGS

The above-described aspects will hereafter be more explained with further details and benefits with reference to the drawings showing an embodiment of the invention by way of example.
Fig. 1 indicates a system for conditioning particulate material in operation, partly in cross section (silo 3);
Fig. 2 indicates feeding particulate material into the system of Fig. 1;
Fig. 3 indicates a gas outlet for the system of Fig. 1.

### DETAILED DESCRIPTION OF EMBODIMENTS

It is noted that the drawings are schematic, not necessarily to scale and that details that are not required for understanding the present invention may have been omitted. The terms "upward", "downward", "below", "above", and the like relate to the embodiments as oriented in the drawings, unless otherwise specified. Further, elements that are at least substantially identical or that perform an at least substantially identical function are denoted by the same numeral.

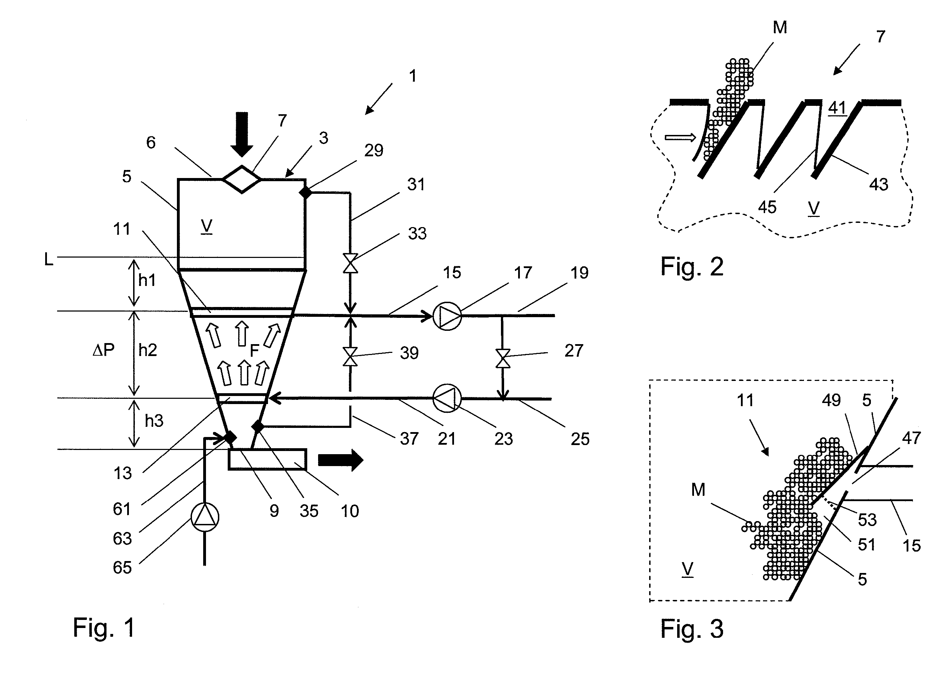

Fig. 1 indicates a system 1 for conditioning particulate material and/or gas. The system 1 comprises a silo 3 having silo walls 5, a cap 6 and an inner volume V for holding particulate material, e.g. particulate material to be conditioned. The silo 3 is provided with an entrance port 7 for introducing the particulate material to be conditioned and an exit port 9 for dispensing conditioned particulate material, here onto a vibrating feeder 10. However the material may also be dispensed in or on other types of apparatus, e.g. a conveyor, a container, a truck or a further processing apparatus. These aspects of the silo 3 may be customary for a silo for temporary storing particulate material, in particular cokes.

In addition, a gas outlet 11 is arranged in a silo wall 5 and a gas inlet 13 is arranged in a silo wall 5.

A main suction ductwork 15 connecting the gas outlet 11 with a main suction device 17, e.g. a fan, is provided for removing gas from the inner volume V of the silo 3. An optional further ductwork 19 is provided for treatment and/or disposal of the removed gas, e.g. in a gas treatment centre (not indicated).

A blowing ductwork 21 connecting the gas inlet 13 with a blower 23 for forcing gas, e.g. conditioning gas, into the inner volume V of the silo 3 through the gas inlet 13 is also provided. An optional further ductwork 25 may be provided for connecting the blower 23 with a source of gas, e.g. one or more gas reservoirs, an exhaust gas system of some process such as a burner, a hot stove and/or a blast furnace (not indicated), or a supply of a gas (to be) heated by such exhaust gas via a heat exchanger. The gas may comprise one or more reactive components for interaction with the particulate material.

An optional recirculation ductwork 27 with a flow regulator, e.g. a valve, is provided for reintroduction of gas removed through the gas outlet 11 from the inner volume V of the silo 3 back into the inner volume V of the silo 3 through the gas inlet 13, e.g. for regaining energy and/or re-usable conditioning gas.

A first additional gas outlet 29 connected with a first additional suction ductwork 31 having a flow regulator 33, e.g. a valve, is provided. A second additional gas outlet 35 connected with a second additional suction ductwork 37 having a flow regulator 39, e.g. a valve, is also provided. Here, the first and second additional suction ductworks 31, 37 are connected with the main suction ductwork 15 and the main suction device 17.

Further, an optional additional gas inlet 61 is provided which is connected with an additional blowing ductwork 63 in turn connected with an additional blower 65 for forcing an additional gas into the inner volume V of the silo 3 through the additional gas inlet 61 from an additional gas source (not shown). The additional gas inlet 61 is arranged close to the exit port 9.

Fig. 2 shows a possible embodiment of the entrance port 7 for introducing particulate material M into the inner volume V of the silo 3. The entrance port 7 is arranged in the cap 6 of the silo 3 for feeding the material M into the silo 3 by gravity. The entrance port 7 comprises channels 41 between inwards inclined baffles 43 and swinging doors 45 that are movably suspended to rest by gravity against the baffles 43, thus closing the channels 41 as reverse flow valves. An accidental overpressure inside (the inner volume V of) the silo 3 will push the doors 45 shut as well (see the arrow). The mass and orientation of the baffles 43 and doors 45 are chosen such that particulate matter M deposited into the channels 41 can open a door 45 and fall into (the inner volume V of) the silo 3. The doors 45 may be formed by rigid plates and/or flexible objects, e.g. rubber flaps.

However, different entrance ports and/or shutters, e.g. one or more rotary feeders, locks and/or doors may be provided as well.

The exit port 9 may be of known construction, e.g. comprising an opening in a bottom end of the silo with a flow restrictor, e.g. one or more doors, valves, vibrating feeders, rotary feeders, adjustable grids, etc.

Fig. 3 indicates a preferred embodiment of a gas outlet 11. The gas inlet 13 and additional outlets 29, 35 preferably are of similar construction. The indicated gas outlet 11 is arranged in an inclined portion of a silo side wall 5 (cf. Fig. 1) and comprises an opening 47 in the silo wall 5 to which (a lumen of) the main suction ductwork 15 is connected for withdrawing gas from (the inner volume V of) the silo 3. A downward directed baffle 49 extends from the silo wall 5 inward into the inner volume V of the silo 3 and vertically overlaps the opening 47 so that the gas outlet 11 comprises a downward directed aperture 51 so that particulate material M is prevented from entering the opening 47 by falling and/or agitation. An optional support and/or a grating 53 may be further provided in or near the aperture 51 for supporting the baffle 49 against the weight and/or impact of (falling) particulate material M, and/or acting as a sieve, although the shape of the particulate material M at the aperture 51 will mainly be determined by the angle of repose of the particulate material M.

In a particularly effective embodiment, the gas outlet 11 and gas inlet 13 extend, e.g. slit-wise, along a significant fraction of the circumference of the silo 3, preferably around substantially the entire circumference as indicated in Fig. 1. The same may hold for the additional gas outlet 29, and possibly for any of the additional gas in-/outlets 61, 29, 35.

For further understanding the methods and operation of the system consider the following exemplary use (see Fig. 1). The silo 3 is filled with particulate material M to be conditioned, e.g. cokes, lumps of ore and/or pellets, through the entrance port 7 (see Fig. 2 and the bold arrow in Fig. 1) in the inner volume V up to a filling level L that is above the gas outlet 11, gas inlet 13 and additional gas outlet 35. In a silo 3 with a lower tapering section and an upper straight section (e.g. a conical section and a cylindrical section), as indicated in Fig. 1, the filling level L may be chosen to be in the straight section which tend to provide a generally even pressure on the material below.

Note that the filling level L is above the gas outlet 11 by a first height h1, the gas outlet 11 is above the gas inlet 13 by a second height h2 and the gas inlet 13 is above the exit port 9 by a third height h3. Via the exit port 9 the particulate matter M in the silo 3 may be in open communication with the outside environment.

When the silo 3 is sufficiently filled with particulate material M to be conditioned, a gas flow F is generated through the material M (open arrows in Fig. 1) from the gas inlet 13 to the gas outlet 11 due to the forced introduction of conditioning gas into the inner volume V of the silo 3 through the gas inlet 13 due to the blower 23 and forced suction of used conditioning gas that has travelled through the particulate material M through the gas outlet 11 due to the suction device 17. Proper adjustment of the gas introduction (blowing) and gas suction forces, respectively, with respect to each other can ensure that substantially all gas flow remains within the particulate material M and no conditioning gas is forced out of the particulate material M. The particulate material M closer to the gas outlet 11 serves as a natural precoat filter for amounts of particulate material M further away from the gas outlet 11, enhancing dust retention within the material M. When removing a portion of the conditioned material M, the material column inside the silo 3 will follow and flow or fall down, thus the natural precoat filter of the material M is regenerated. This prevents that the filter action is impaired due to clogging. The optional grill 53 may also serve as a filter.

Partial or full fluidization of the material M may be controlled or prevented. Thus, dust formation and agitation in the silo 3 above the level L of the material can be reduced or even be avoided. When the filling level L drops to neat or at the level of the gas outlet 11, the risk for updrafts of the gas and associated agitation of dust may exist. If the silo is to be operated at different filling levels, controllable gas outlets at different heights may be provided.

When sufficiently conditioned, the gas flow may be stopped and the silo 3 be emptied for conditioning of subsequent batch (e.g. lower bold arrow in Fig. 1), or the process can be performed (quasi-) continuously, wherein a mass flow of the particulate matter to be conditioned and a conditioning gas flow are maintained for prolonged periods.

Suction through the first additional gas outlet 29 may ensure that a small under pressure exists in inner volume V of the silo 3, compared to the environment. Suction through the second additional gas outlet 35 may ensure that a small under pressure, compared to the environment, exists in the particulate material M portion between the second additional gas outlet 35 and the exit port 9. Thus escape of agitated and airborne dust through the entrance port 7 and/or exit port 9 is reduced or prevented. The additional suction may also help to fine-tune the pressure balance, and thus gas distribution and -flow, within the conditioned particulate matter M.

The conditioning process is determined by factors such as the height difference h2 between the gas inlet 13 and outlet 11, and characteristics of blowing and suction forces, e.g. as determined by flow resistances. Control of the conditioning process may be done by controlling a number of parameters, primarily the flow velocity of the conditioning gas and the flow velocity of the material which determine respective dwell times in the silo 3 and thus interaction time, but also by adjusting gas parameters such as gas composition, temperature, relative humidity, etc.

Via the additional gas inlet 61 an additional conditioning gas from an additional conditioning gas supply system (not shown) may be introduced into the inner volume V of the silo 3. Optionally, as shown here, the additional gas is forcefully introduced by the optional additional blower 65. The additional gas may differ from the conditioning gas of the conditioning gas inlet system 13, 21-25, with respect to composition and in particular with respect to temperature for an additional conditioning of the particulate material. In a particular embodiment, the main conditioning as discussed above comprises heating of the particulate material, e.g. to accelerate drying as the main object of the conditioning process, and the additional conditioning by the additional system 61-65 comprises introduction of a cold gas for cooling the particular material to a desired temperature, e.g. for protecting a receiving structure receiving the conditioned material from the exit port 9, here the vibrating feeder 10.

Suitable positions, e.g. with respect to the height of the silo and/or the particular material flow of the additional inlet 61 and the second additional outlet 35 enable control over the gas flow, pressure distribution, dust formation and/or agitation, and/or temperature distribution near the exit port.

Exemplary ranges of suitable values for silo dimensions and operating parameters for drying coke with customary particle sizes in a range of 35 - 80 mm in a system according to Figs. 1-3 are given in the table below.

| Quantity | Unit | Exemplary values |
|---|---|---|
| Silo dimensions | | |
| h1 | m | 3 - 5 |
| h2 | m | 3 - 10 |
| h3 | m | 2 - 4 |
| inlet gas velocitv | m/s | 5 - 10 |
| gas inlet area | m² | 1 - 5 |
| | | |

| Drying gas | | |
|---|---|---|
| inlet humidity | % | 0 - 30 |
| inlet temperature | °C | 60 - 200 |
| outlet humidity | % | 50 - 100 |
| outlet temperature | °C | 20 - 150 |
| gas flow | Nm³/h | 50 000 - 150 000 |
| superficial velocity in silo | m/s | 0.5 - 2.0 |
| differential pressure over h2 | kPa | 0.5 - 5.0 |
| | | |

| Material | | |
|---|---|---|
| filling capacity | kg /h | 5 000 - 50 000 |
| discharging capacity | kg /h | 5 000 - 50 000 |
| moisture content material at inlet port | % | 10 - 25 |
| moisture content material at exit port | % | 3 - 8 |
| residence time of material | min | 60 - 200 |

Typical materials and particle size ranges for the particular material may comprise pellets of 5-20 mm, cokes of 35 - 80 mm and/or nut coke of 10 - 35 mm, but the particles may have any shape providing permeability of the material for establishing and maintaining the gas flow.

For conditioning gas by interaction with particulate material substantially the same method steps may be used, wherein the introduced gas comprises the gas to be conditioned and the particulate material.

The invention is not restricted to the above described embodiments which can be varied in a number of ways within the scope of the claims. For instance, flow restriction devices and/or suction devices, blowers, etc. may be remotely operated. Plural similar conditioning silos may be provided that share ductworks, suction devices and/or blowers. Measurement equipment for conditioning parameters may be provided.

The gas flow direction may be inverted, such that the gas outlet port 11 and gas inlet port 13 reverse roles. In such case the second (lower) optional additional suction system of suction outlet 35, ductwork 37 and suction device(s), may become less relevant.

The present method and system may be used for drying and heating cokes, but it may also be applicable for smaller scale applications, e.g. for conditioning particulate materials in chemical and/or pharmaceutical industry, where formation and/or agitation of dust may also pose problems.

Elements and aspects discussed for or in relation with a particular embodiment may be suitably combined with elements and aspects of other embodiments, unless explicitly stated otherwise.

## Claims

1. A method of conditioning particulate material (M) and/or a gas, in particular comprising drying and heating cokes, comprising the steps of:
feeding an amount of particulate material up to a filling level (L) into in an inner volume (V) of a silo (3) having silo walls (5), a gas inlet (13) and a gas outlet (11), and
generating a gas flow (F) of a gas, in particular a dry hot gas, from the gas inlet through the particulate material to the gas outlet which comprises applying suction to the inner volume of the silo through the gas outlet, wherein the gas outlet is located in a silo wall below the filling level and covered by the particulate material.

2. The method according to claim 1, wherein at least part of the gas flow (F) is generated by blowing the gas into the inner volume (V) of the silo (3) through the gas inlet (13).

3. The method according to any preceding claim, wherein at least part of the gas flow (F) is generated by feeding the gas into the particulate material (M) through a gas inlet (13) that is located in a silo wall (5) below the filling level (L) and covered by the particulate material (M).

4. The method according to any preceding claim, comprising applying additional gas suction to the inner volume (V) of the silo (3) through an additional gas outlet (29) above the filling level (L).

5. The method according to any preceding claim, comprising applying additional gas suction to the inner volume (V) of the silo (3) through an additional gas outlet (35) that is located in a silo wall (5) below the filling level (L) and covered by the particulate material (M).

6. The method according to any preceding claim, comprising providing a flow of the particulate material (M) through the silo (3), and regulating the suction of gas out of and, where applicable, the blowing of the gas into the inner volume (V) of the silo, respectively, in accordance with the flow of the particulate material through the silo.

7. System (1) for conditioning particulate material (M) or gas, in particular according to the method of any preceding claim, comprising
a silo (3) having silo walls (5) and an inner volume (V) for holding particulate material, a gas outlet (11) arranged in a silo wall and a gas inlet (13) arranged in a silo wall;
a main suction device (17) and a main suction ductwork (15) connecting the gas outlet with the main suction device for removing gas from the inner volume of the silo,
wherein the silo is arranged for holding particulate material in the inner volume up to a filling level (L) that is above the gas outlet for, in use and when an amount of particulate material is filled up to the filling level into the inner volume of the silo, generating a gas flow (F) of a gas from the gas inlet through the particulate material to the gas outlet that is below the filling level and covered by the particulate material.

8. The system (1) according to claim 7, comprising a blower (23) and a blowing ductwork (21) connecting the gas inlet (13) with the blower for forcing gas into the inner volume (V) of the silo (3) through the gas inlet to generate the gas flow (F), and wherein in particular the gas inlet is arranged below the gas outlet.

9. The system (1) according to any one of claims 7-8, wherein the silo (3) is arranged for holding particulate material (M) in the inner volume (V) up to a filling level (L) that is above the gas inlet (11) for, in use and when an amount of particulate material is filled up to the filling level into the inner volume of the silo, generating at least part of the gas flow (F) from the gas inlet being below the filling level and covered by the particulate material, and wherein in particular the gas inlet is arranged below the gas outlet.

10. The system (1) according to any one of claims 7-9, wherein the gas inlet (13) is connected with an exhaust gas system of a hot stove and/or a blast furnace, in particular via a heat exchanger.

11. The system (1) according to any one of claims 7-10, comprising a first additional gas outlet (29) arranged in a silo wall (5) and a first additional suction ductwork (31) connecting the first additional gas outlet with a suction device (17) for removing gas from the inner volume (V) of the silo (3), for in use and when an amount of particulate material is filled up to the filling level (L) into the inner volume of the silo, applying additional suction to the inner volume of the silo above the filling level, wherein in particular the first additional suction ductwork comprises a gas flow regulator (33).

12. The system (1) according to any one of claims 7-11, comprising a second additional gas outlet (35) arranged in a silo wall (5) and a second additional suction ductwork (37) connecting the second additional gas outlet with a suction device (17) for removing gas from the inner volume (V) of the silo (3) for in use, and when the amount of particulate material is filled up to the filling level (L) into the inner volume of the silo, having the second additional gas outlet covered by the particulate material and generating a gas flow through the particulate material to the second additional gas outlet, wherein in particular the second additional ductwork comprises a gas flow regulator (39) for adjustably removing gas from the inner volume of the silo.

13. The system (1) according to any one of claims 11-12, wherein at least one of the first and second additional ductworks (31, 37) are connected to the main suction ductwork 15 and/or the main suction device (17).

14. The system (1) according to any one of claims 7-13, wherein the silo (3) has an upper portion and a tapered lower portion and at least the gas outlet (11), preferably also the gas inlet (13) is formed in a silo wall (5) in the tapered lower section.

15. The system (1) according to any one of claims 9-14, wherein the silo (3) has an entrance port (7) for introducing the particulate material (M) and an exit port (9) for dispensing particulate material and the system is configured for continuous or quasi-continuous operation by continuous or repeated introduction and withdrawal of particulate material into and out of the silo, respectively, thus providing a particulate material flow through the silo, wherein the exit port (9) is arranged below the gas inlet (13) and the gas outlet (11).
